# EUROPEAN PATENT APPLICATION

(11) **EP 4 763 939 A1**
(43) Date of publication of application: **24.06.2026**
(21) Application number: 24307239.4
(22) Date of filing: 20.12.2024
(51) Int. Cl.: C09J 123/14, C08L 23/08

(54) **HOT MELT PRESSURE SENSITIVE ADHESIVE COMPOSITION**

(71) Applicant: Bostik SA, 92800 Puteaux (FR)
(72) Inventor: BELLINI, Clément, 60280 Venette (FR); HOUËL, Karine, 60280 Venette (FR); KOMAR, Stéphanie, 60280 Venette (FR)
(74) Representative: Arkema Patent

(57) **Abstract**

The present invention relates to a hot melt adhesive composition comprising:
- a polyolefin PO1 having a melt index greater than 500 g/10 min at 190°C, an enthalpy of crystallization greater than 40 J/g, and a melting point lower than 80°C;
- a polyolefin PO2 having an enthalpy of crystallization lower than 30 J/g, and a weight average molecular weight (Mw) greater than or equal to 10 000 g/mol;
- a tackifier;
- an amorphous polyolefin PO3 having a weight average molecular weight (Mw) ranging from 500 to 8 000 g/mol.

## Description

### TECHNICAL FIELD

The present invention relates to a hot melt pressure sensitive adhesive composition useful for hygiene disposable articles, and more particularly for adhering feminine sanitary pads or adult incontinent products on fabrics.

### TECHNICAL BACKGROUND

Hot melt adhesives (HM adhesives) are substances which are solid at room temperature and which comprise neither water nor solvent. They are applied in the molten state after heating to a temperature generally of between 120 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer. Contrary to HM adhesives, hot melt pressure sensitive adhesives (HMPSA) are substances conferring an immediate and permanent tackiness property (also called *"tack*") to a substrate coated with such adhesive which allows its instantaneous adhesion to another substrate under a slight and brief pressure, at room temperature.

Hot melt adhesives have been used for many years in the construction of a wide variety of disposable nonwoven goods, such as disposable diapers, training pants, adult incontinent products (pads or briefs), feminine care products (napkins or pads) and surgical masks. These items aim at receiving and containing body fluids and are usually worn against or in close proximity to the skin. One specific application where HMPSA have traditionally been used is to adhere a periodic care article to a consumer's undergarment. This requires a precise balance of adhesion properties to ensure the article is adhered so that its stays in place during use but is also capable of being removed without leaving residue on or damaging the undergarment. Conventionally, these HM PSA are formulated using styrene block copolymers (SBC) due to their ability to rapidly adhere to surfaces with the application of low pressure at room temperature. However, these conventional SBC-based HMPSA are known to be linked to staining issues due to use of mineral oil, to residue issues, and to odors.

There is thus a need for new hot melt adhesives that allows to resolve at least a part of the above-mentioned drawbacks.

There is a need for providing a hot melt adhesive composition exhibiting good adhesion properties on a variety of substrate materials and fabrics, no residues, low odor and with reduced staining.

### DESCRIPTION OF THE INVENTION

### A. Hot melt pressure sensitive adhesive composition

The term *"hot melt'* is used herein to describe that the adhesive composition requires to be heated at least at 120°C, preferably at least at 140°C, to be applied on a substrate. The hot melt pressure sensitive adhesive composition is thus solid at 23°C.

The present invention relates to a hot melt pressure sensitive adhesive composition comprising:
- a polyolefin PO1 having a melt index greater than 500 g/10 min at 190°C, an enthalpy of crystallization greater than 40 J/g, and a melting point lower than 80°C;
- a polyolefin PO2 having an enthalpy of crystallization lower than or equal to 30 J/g, and a weight average molecular weight (Mw) greater than or equal to 10 000 g/mol;
- a tackifier;
- an amorphous polyolefin PO3 having a weight average molecular weight (Mw) ranging from 500 to 8 000 g/mol.

The hot melt pressure sensitive adhesive composition thus comprises at least four different ingredients: polyolefin PO1, polyolefin PO2, tackifier and amorphous polymer PO3.

### Polvolefin PO1

The hot melt pressure sensitive adhesive composition according to the invention comprises a polyolefin PO1 having a melt index greater than 500 g/10 min at 190°C, an enthalpy of crystallization greater than 40 J/g, and a melting point lower than 80°C.

The melting point of PO1 is typically measured by DSC, in particular with following conditions : heating phase from -70°C to 200°C at 10°C/min, then cooling phase from 200°C to -70°C at -10°C/min, and then second similar heating phase where the melting point is measured.

The PO1 may be a homopolymer or a copolymer, preferably a copolymer.

The PO1 may be obtained by polymerizing one or more alpha-olefin monomers, for example, ethylene, propylene, 1-butene, 2-methyl-1-propene, 1-pentene, 3-methyl-1-butene, 3-methyl-1-pentene, 1-hexene, 1-heptene and/or 1-octene.

Preferably, the PO1 is a homopolymer or copolymer of ethylene, more preferably a copolymer of ethylene. For example, the PO1 may comprise more than or equal to 60 % by weight of ethylene units with respect to the weight of the PO1.

When the PO1 is a copolymer of ethylene, the other monomer(s) constituting said copolymer may be selected from propylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is octene, more preferably the other monomer is only octene.

Preferably, the PO1 is a copolymer of ethylene and octene comprising more than or equal to 60 % by weight of ethylene units and between 1 % and 40 % by weight of octene units with respect to the weight of the PO1.

The weight average molecular weight may be measured by size exclusion chromatography (SEC), for example with a polystyrene calibration. For example, 1,2,4 trichlorobenzene can be used as the eluent, and the temperature can be about 170°C, and the chromatograph can be equipped with a differential refractive index detector (DRI) and an online light scattering (LS) detector.

The PO1 has preferably an enthalpy of crystallization greater than or equal to 45 J/g.

Preferably, PO1 is stereospecific.

Preferably, PO1 has a weight average molecular weight (Mw) greater than or equal to 10 000 g/mol.

As used herein, the enthalpy of crystallization is determined by DSC where a sample (for example about 10 mg) is cooled (first cool) from 200°C to -70°C at 10°C/min.

The PO1 has preferably a melt index at 190°C and 2.16 kg greater than or equal to 650 g/10 min, more preferably greater than or equal to 800 g/10 min. The melt index may be measured according to ASTM D1238.

The PO1 content in the hot melt pressure sensitive adhesive composition according to the invention preferably ranges from 2 % to 40 % by weight with respect to the total weight of the hot melt pressure sensitive adhesive composition, more preferably from 5% to 30 % by weight, even more preferably from 5% to 20% by weight.

A commercial PO1 is for example Affinity GA1900 (random ethylene octene copolymer having a MFI of 1000 g/10 min at 190°C (2.16kg) and softening point of 68°C) commercialized by DOW.

### Polvolefin PO2

The hot melt pressure sensitive adhesive composition comprises a polyolefin PO2 having an enthalpy of crystallization lower than or equal to 30 J/g, and a weight average molecular weight (Mw) greater than or equal to 10 000 g/mol.

As used herein, the word "a" or "an" means one or more.

The PO2 may be a homopolymer or a copolymer, preferably a copolymer.

By "copolymer", it is intended a polymer comprising at least two different repeating units.

The PO2 may be obtained by polymerizing one or more alpha-olefin monomers.

In the present text, "alpha-olefin" designates an alkene of formula CₙH₂ₙ (n corresponding to the number of carbon atoms), which has a carbon-carbon double bond at the first carbon atom (alpha-carbon).

For example, the alpha-olefin monomer may be ethylene, propylene, 1-butene, 2-methyl-1-propene (isobutylene), 1-pentene, 3-methyl-1-butene, 3-methyl-1-pentene, 1-hexene, 1-heptene and/or 1-octene.

Preferably, the PO2 is a homopolymer or copolymer of ethylene, more preferably a copolymer of ethylene. For example, the PO2 may comprise more than or equal to 60 % by weight of ethylene units with respect to the weight of the PO2.

When the PO2 is a copolymer of ethylene, the other monomer(s) constituting said copolymer may be selected from propylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is butene or octene.

In the present text, the weight percentages of the monomer units (e.g. propylene, ethylene, etc.) constituting a polymer can be determined by the skilled person, for example by ¹H NMR (Nuclear Magnetic Resonance).

Preferably, PO2 is a copolymer of ethylene and butene (or octene), comprising more than or equal to 60 % by weight of ethylene units and between 1 % and 40 % by weight of butene (or octene) units with respect to the weight of the PO2.

The PO2 has preferably a weight average molecular weight ranging from 10 000 g/mol to 75 000 g/mol, more preferably from 10 000 g/mol to 50 000 g/mol, and even more preferably from 10 000 g/mol to 30 000 g/mol.

The weight average molecular weight may be measured by size exclusion chromatography (SEC), for example with a polystyrene calibration. For example, 1,2,4 trichlorobenzene can be used as the eluent, the temperature can be about 170°C, and the chromatography can be equipped with a differential refractive index detector (DRI) and an online light scattering (LS) detector.

The polydispersity index of the PO2 may be comprised between 1 and 4, preferably between 2 and 3. The polydispersity index corresponds to the weight average molecular weight divided by the number average molecular weight.

The PO2 has preferably an enthalpy of crystallization ranging from 10 J/ to 30 J/g, more preferably from 15 J/g to 30 J/g, even more preferably from 20 J/g to 30 J/g.

The PO2 has preferably a melt index at 190°C and 2.16 kg lower than or equal to 300 g/10 min, more preferably lower than or equal to 100 g/10 min, even more preferably lower than or equal to 50 g/10 min. The melt index may be measured according to ASTM D1238.

Unless otherwise stated, standards mentioned throughout the present application are those in effect on the date the application is filed.

Preferably, PO2 is stereospecific.

The PO2 content in the hot melt adhesive composition according to the invention may range from 2 % to 40 % by weight with respect to the total weight of the hot melt adhesive composition, preferably from 5 % to 30 % by weight, more preferably from 5% to 20 % by weight.

Commercial examples of polyolefin PO2 are Fortify C1055D (ethylene octene copolymer having a MFI of 1 g/10 min at 190°C (2.16 kg) and Mw greater than 10 000 g/mol) commercialized by Sabic; or Lucene LC168 (ethylene butene copolymer having a MFI of 1.2 g/10 min at 190°C (2.16 kg) and Mw greater than 10000 g/mol) commercialized by LG Chem.

### Polyolefin PO3

As defined herein, an amorphous polyolefin is a polyolefin having an enthalpy of crystallization of less than 8 J/g (when the polyolefin is completely amorphous, it is considered that its enthalpy of crystallization is equal to 0 J/g), preferably less than 6 J/g, even more preferably the amorphous polyolefin has an enthalpy of crystallization equal to 0 J/g.

The hot melt pressure sensitive adhesive composition comprises an amorphous polyolefin PO3 having a weight average molecular weight (Mw) ranging from 500 to 8 000 g/mol.

More preferably, PO3 has a weight average molecular weight (Mw) ranging from 600 to 7 000 g/mol.

The PO3 may be a homopolymer or a copolymer, preferably a copolymer.

By "copolymer", it is intended a polymer comprising at least two different repeating units.

The PO3 may be obtained by polymerizing one or more alpha-olefin monomers.

For example, the alpha-olefin monomer may be ethylene, propylene, 1-butene, 2-methyl-1-propene (isobutylene), 1-pentene, 3-methyl-1-butene, 3-methyl-1-pentene, 1-hexene, 1-heptene and/or 1-octene.

Preferably, the PO3 is a homopolymer or copolymer of propylene or butene, more preferably a copolymer of propylene. For example, the PO3 may comprise more than 60 % by weight of propylene units with respect to the weight of the PO3, preferably more than 70 % by weight, more preferably more than 80 % by weight, even more preferably more than 85 % by weight.

When the PO3 is a copolymer of propylene, the other monomer(s) constituting said copolymer may be selected from ethylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is ethylene.

In the present text, the weight percentages of the monomer units (e.g. propylene, ethylene, etc.) constituting a polymer can be determined by the skilled person, for example by ¹H NMR (Nuclear Magnetic Resonance).

The amorphous polyolefin PO3 is preferably a single-site catalyzed polyolefin. Preferably, PO3 is metallocene catalyzed polyolefin.

The PO3 content in the hot melt adhesive composition according to the invention may range from 5 % to 40 % by weight with respect to the total weight of the hot melt adhesive composition, preferably from 10 % to 40 % by weight, more preferably from 15% to 35% by weight.

Commercial example of PO3 is Licocene PPA 300 (amorphous metallocene-catalyzed propylene ethylene copolymer having a viscosity at 170°C between 100 and 300 mPa.s and Mw = 6000 g/mol) commercialized by CLARIANT, or Indopol H50 (amorphous polybutene with Mw = 800 g/mol) commercialized by INEOS.

### Tackifier/tackifvina resin

The hot melt pressure sensitive adhesive composition according to the invention comprises a tackifying resin (tackifier).

The tackifying resin may be selected from:
- natural and modified rosin, such as gum rosin, wood rosin, tall-oil rosin, distilled rosin, hydrogenated rosin, dimerized rosin, polymerized rosin,
- esters of natural and modified rosins, in particular glycerol and pentaerythritol esters, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, α-methylstyrene, styrene and/or methylindene.

Examples of suitable tackifying resins include those commercially available under the tradenames Eastotac^{®} H100W (resin C5 fully hydrogenated) from Eastman Chemical Company; Escorez^{®} 2203LC (resin C5/C9) from ExxonMobil Chemical company; Sukorez^{®} SU 120 (resin DCPD fully hydrogenated), Sukorez^{®} SU 210 (resin DCPD/C5 fully hydrogenated), Sukorez^{®} SU 420 (resin DCPD/C9 partially hydrogenated), Sukorez^{®} SU525 (resin DCPD fully hydrogenated) and Hikorez^{®} H2100 (resin C5 hydrogenated) from Kolon; Regalite^{®} S7125 (resin C9 partially hydrogenated) from Eastman Chemical Company; HS-130 (resin DCPD hydrogenated) from Hanwha Solutions/chemical Corporation; Luhorez HD1120 (resin DCPD hydrogenated) from Tianjin Luhua Chemical; Henghe HM1000 (resin DCPD/C9 hydrogenated) and Henghe H5-1001 (resin C5 fully hydrogenated) from Henghe Materials and Science Technology Co. LTD; unmodified natural tall oil rosins from Kraton sold under the trade names Sylvaros^{®} (85, 90 and NCY); partially hydrogenated rosin from Eastman sold under the trade name Foralyn^{®} E; the fully hydrogenated rosin from Eastman sold under the trade name Foral^{®} AX-E; the fully hydrogenated rosin from DRT sold under the trade name Foral^{®}DX; the fully hydrogenated rosin ester from DRT sold under the trade name Foral^{®} 105; the dimerized rosin from Eastman sold under the trade name Dymerex^{®}; Sylvalite^{®} RE 100L ou RE 100S (pentaerythritol based tall-oil rosin ester), Sylvalite^{®} RE 85L (a glycerol ester of tall oil rosin) from Kraton; Sylvalite 9000 from Kraton (fully hydrogenated tall oil rosin ester); polyterpene tackifiers from Kraton sold under the trade names Sylvagum^{®} TR and Sylvares^{®} TR series (7115, 7125, A25L, B115, M1115); the polyterpene PX1250H from Yasuhara; the polyterpene from DRT sold under the trade name DERCOLYTEOM105 (resulting from the polymerization of α-pinene and β-pinene and having a Ring and Ball softening point of 105°C); the terpene phenol resins from Kraton sold under the trade names Sylvares^{®} TP (96, 2040, 300, 7042, 2019).

Preferably, the tackifying resin is selected from:
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

More preferably, the tackifying resin is selected from:
- aliphatic petroleum hydrocarbon resins (C5), resulting from the polymerization of C5-hydrocarbon monomers,
- dicyclopentadiene petroleum resins (DCPD), resulting from the polymerization of dicyclopentadiene monomers optionally in mixture with aliphatic C5-hydrocarbon monomers,
- their corresponding hydrogenated derivatives (resulting from a subsequent total or partial hydrogenation thereof), and
- mixtures thereof.

According to a preferred embodiment, the tackifying resin is hydrogenated (totally or partially).

The tackifying resin may have a softening point comprised between 20°C and 160°C, preferably between 85°C and 130°C, and even more preferably between 85°C and 110°C. The softening point can be measured by a ring and ball method, for example according to ASTM E28.

The total content of the tackifying resin in the hot melt pressure sensitive adhesive composition according to the invention may range from 20 % to 70 % by weight with respect to the total weight of said composition, preferably from 30 % to 60 % by weight, more preferably from 40 % to 60 % by weight.

### Other additives

The hot melt pressure sensitive adhesive composition according to the invention may further comprise one or more additives selected from ultraviolet (UV) stabilizers (or antioxidants), fillers, surfactants, plasticizers, crosslinking agent, fire-retardant mineral or organic agents, pigments, fluorescent agents, wax, and mixtures thereof, in particular from UV stabilizers.

The total content of additives in the composition according to the invention may be up to 15 % by weight with respect to the total weight of the composition, preferably between 0.1 % and 5 % by weight.

These optional other additives are well known in this art.

The wax may be a paraffin wax, a Fischer-Tropsch wax, an EVA wax, a natural wax (such as carnauba wax, rice wax, beeswax, etc.), or mixtures thereof.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("AET").

By "EVA wax", it is intended oligomeric polymer compounds that are prepared via a process comprising the co-polymerization of ethylene and vinyl acetate monomers and that have typically the following properties: (a) solid at room temperature (e.g. 23°C); (b) low melting point (e.g. less than 100°C); and (c) insoluble in water. The EVA copolymers of the EVA wax may be functionalized or modified in any possible manner.

The wax is preferably non-acid modified. By "acid-modified", it is intended comprising at least one carboxylic acid group (-C(O)OH) and/or carboxylic anhydride group.

Advantageously, the hot melt pressure sensitive adhesive composition according to the invention further comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles, benzophenones, hindered amines (also named HALS for "hindered amine light stabilizers"), hindered phenols and multifunction phenols (such as sulfur and phosphorous-containing phenols and derivatives thereof), preferably hindered phenols.

Representative hindered amines include bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) and/or or 4,4'-bis(α,α-dimethylbenzyl)diphenylamine.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

Suitable antioxidants include those commercially available under the tradenames Irganox^{®} 1010 (tetrakis(methylene(3,5-di-ter-butyl-4-hydroxyhydrocinnamate)) methane), Irgafos^{®} 168 (tris(2,4-ditert-butylphenyl)phosphate) and Irganox^{®} PS800 (propanoic acid, 3,3'-thiobis-1,1'-didodecyl ester) from BASF, Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon.

The UV stabilizer (or antioxidant) content may be between 0.1 % and 5 % by weight with respect to the total weight of the hot melt adhesive composition according to the invention, preferably between 0.3 % and 3 % by weight.

### Hot melt pressure sensitive adhesive

Preferably, the hot melt pressure sensitive adhesive composition has an enthalpy of crystallization of 15 J/g or lower, more preferably from 1 to 12 J/g, and even more preferably from 1 to 6 J/g.

The measurement method of the enthalpy of crystallization of the hot melt is similar to the one disclosed for PO1.

The total amount of the sum of PO1 and PO2 in the hot melt pressure sensitive adhesive composition is preferably lower than or equal to 50 wt%, more preferably lower than or equal to 40 wt% based on the total weight of said hot melt. Even more preferably, the total amount of the sum of PO1 and PO2 ranges from 5 wt% to 30 wt%.

Preferably, the hot melt pressure sensitive adhesive composition is free of styrene block copolymer.

Preferably, the hot melt pressure sensitive adhesive composition does not comprise mineral oil, such as naphtenic oil or paraffinic oil.

The hot melt pressure sensitive adhesive composition may have a Brookfield viscosity at 163°C of from about 3000 to about 25 000 mPa.s, preferably from about 3000 to about 20 000 mPas, and more preferably from about 5000 to about 20000 mPas. The Brookfield viscosity may be measured according to the standard method ASTM D-3236, using a Brookfield viscometer of the type Spindle 27, at a temperature of about 163°C.

Preferably, the hot melt pressure sensitive adhesive composition comprises:
- a polyolefin PO1 having a melt index greater than 500 g/10 min at 190°C, an enthalpy of crystallization greater than 45 J/g, and a melting point lower than 80°C;
- a polyolefin PO2 having an enthalpy of crystallization from 10 to 30 J/g, and a weight average molecular weight (Mw) greater than or equal to 10 000 g/mol;
- a tackifier;
- an amorphous polyolefin PO3 having a weight average molecular weight (Mw) ranging from 500 to 8 000 g/mol;

wherein the total amount of the sum of PO1 and PO2 in the hot melt pressure sensitive adhesive composition is lower than or equal to 40 wt% based on the total weight of said hot melt; and
wherein PO1 and PO2 are homopolymer or copolymer of ethylene;
wherein said hot melt pressure sensitive adhesive composition has an enthalpy of crystallization from 1 to 6 J/g.

The hot melt adhesive composition of the invention exhibits advantageously at least one of the following features:
- an initial peel performance on cotton substrate of at least about 1.5 N/2.5 cm (preferably at least 2 N/2.5 cm). The peel performance on cotton substrate is measured according to the method described in the example section below.
- Low variation of peel performance after ageing at 55°C for 4 weeks (initial peel and/or body temperature peel) in particular on cotton, polyester or nylon;
- good adhesion properties on a variety of substrate materials and fabrics, while making it possible to reduce and even avoid residues on the fabric (e.g. under garment) after removal of the article;
- reduced staining;
- low odor;
- good peel after exposure at body temperature to enable removal of the hygiene disposable article (such as for example pad) after being used by the consumer.

The hot melt adhesive composition according to the invention can be prepared by mixing its ingredients under heat, preferably at a temperature ranging from 140°C to 180°C and atmospheric pressure.

### B. Use of the hot melt pressure sensitive adhesive composition

The present invention also relates to the use of a hot melt pressure sensitive adhesive composition as described above, for adhering a hygiene disposable article on a fabric.

The hygiene disposable article may be chosen from nonwoven hygiene disposable articles, preferably from the group consisting of disposable diapers, training pants, adult incontinent products (pads or briefs), periodic care products (napkins or pads), more preferably from the group consisting of adult incontinent products (pads or briefs) and periodic care products (napkins or pads).

The fabric may be manufactured utilizing natural or synthetic fibers, including cotton, nylon, polyester, other man-made fibers and mixtures thereof.

The present invention also relates to the use of the hot melt pressure sensitive adhesive composition as described above as positioning adhesive. Such class of adhesive is typically used to position an absorbent article on a garment such as underwear. These articles are removed from garment after use.

According to another aspect, the invention relates to an article comprising at least one interior or exterior surface, preferably at least one exterior surface, coated with the hot melt pressure sensitive adhesive composition as described above. The article may be as described above and is preferably a hygiene disposable article, more preferably chosen from the group consisting of adult incontinent products (pads or briefs) and periodic care products (napkins or pads).

The present invention also relates to a disposable absorbent article including a top sheet, a backsheet, optionally an absorbent core disposed between the topsheet and the backsheet, a hot melt adhesive composition disposed on the garment-facing surface of the backsheet, the hot melt pressure sensitive adhesive composition being as defined above.

All the description, embodiments, preferred embodiments defined above for the hot melt pressure sensitive adhesive composition apply here for the disposable absorbent article without need to repeat it.

The disposable absorbent article being preferably selected from the group consisting of disposable diapers, training pants, adult incontinent products (pads or briefs), periodic care products (napkins or pads) and surgical masks, more preferably from the group consisting of adult incontinent products (pads or briefs) and periodic care products (napkins or pads).

The topsheet is typically designed to contact the body of the user and is liquid permeable. The topsheet is typically constructed of any suitable material that is easily penetrated by bodily exudates. The topsheet optionally includes a plurality of apertures formed therethrough to permit body fluid to pass more readily into the absorbent core.

The backsheet is typically liquid-impermeable and designed to face the inner surface, i.e. the crotch portion of the garment (e.g. underwear) of a user. The backsheet optionally is constructed to permit a passage of air or vapor out of the disposable absorbent article while still blocking passage of liquids.

The hot melt pressure sensitive adhesive composition of the invention can be disposed on the garment facing surface of the absorbent article, or even on the garment facing surface of the backsheet. A release liner optionally is disposed on the hot melt pressure sensitive adhesive composition to protect it until use.

The hot melt adhesive composition may be useful in a variety of forms, including coating (continuous or discontinuous (e.g. random, pattern, array, spiral, dots, spots, and combinations thereof) coatings), film, bead, sheet, fiber, filament, web (e.g. woven and nonwoven), and combinations thereof.

The ranges disclosed in this description include both the lower and the upper limit thereof. For example, the expressions "ranging from x to y" or "between x and y" comprises the limits x and y.

The following examples illustrate the invention without limiting it.

### EXAMPLES

The following materials were implemented:

### Polvolefin PO1:

- Affinity GA1900: ethylene octene copolymer having a MFI of 1000 g/10 min at 190°C (2.16kg) and a softening point of 68°C commercialized by DOW.

### Polyolefin PO2:

- Fortify C1055D: ethylene octene copolymer having a MFI of 1 g/10 min at 190°C (2.16 kg), and Mw greater than 10 000 g/mol, commercialized by Sabic;
- Lucene LC168 : ethylene butene copolymer having a MFI of 1.2 g/10 min at 190°C (2.16 kg) and Mw greater than 10 000 g/mol, commercialized by LG Chem.

### Polvolefin PO3:

- Licocene PPA 300 : amorphous stereospecific propylene ethylene copolymer having a viscosity at 170°C between 100 and 300 mPa.s, commercialized by CLARIANT

### Other ingredients:

- Irganox^{®} 1010 (by BASF): pentaerythritol tetrakis[3-(3,5-di-tert-butyl-4-hydroxyphenyl)propionate] (CAS: 6683-19-8), antioxidant.
- SUKOREZ^{®} SU-500 (by KOLON): hydrogenated dicyclopentadiene resin, softening point = 100°C), tackifying resin,
- SUKOREZ SU-525 (by KOLON): hydrogenated dicyclopentadiene resin, softening point = 125°C), tackifying resin,
- Primol 352 : paraffinic oil commercialized by Univar

### Example 1 : Preparation of the adhesive compositions

The compositions of example 1 in Table 1 are individually prepared by simple mixing of its ingredients. Polymer(s), plasticizer(s) and stabilizer(s) are mixed together and heated at 150 °C until everything dissolved as a homogeneous mixture. Then, resin(s) are added at the same temperature until everything dissolved as a homogeneous mixture. At the end, the mixture is cooled down and collect to be used as it.

**Table 1: Ingredients of compositions 1-4**

| **Composition** | **C1 (invention)** | **C2 (comparative)** | **C3 (invention)** | **C4 (comparative)** |
|---|---|---|---|---|
| Licocene PPA 330 | 27 | - | 27 | - |
| Affinity GA 1900 | 10.2 | 10.2 | 10.2 | 10.2 |
| Fortify C1055D | 10.2 | 10.2 | - | - |
| Sukorez SU-500 | 52.1 | 52.1 | 52.1 | 52.1 |
| Primol 532 | - | 27 | | 27 |
| Lucene LC168 | - | - | 10.2 | 10.2 |
| Irganox^{®} 1010 | 0.5 | 0.5 | 0.5 | 0.5 |
| Total | 100 | 100 | 100 | 100 |

### Example 2 : preparation of a laminate and performances

### Preparation of a laminate by means of a lab coater equipment

A laminating device is used, operating continuously at a line speed of approximately 25 m/minute. In this machine, the coating is made with a slot nozzle:
The two substrates employed are a release liner and a polyethylene non breathable back-sheet.

The hot melt adhesive composition is heated in the melter at a temperature of 160°C. It is then coated at the same temperature of 160°C and at a coating weight of approximately 20 g/m2 on the release paper, which is then transferred on the PE non breathable.

For all compositions, the resulting coating pattern is quite adequate and is typical of a good processability. It corresponds to a continuous layer, which is centered on said release paper and along an axis, which is perpendicular to the axis of the reel.

The PE sheet is then put into contact with the coated surface of the release film by means of a nip roll applying a pressure of 3 bar.

### Initial peel performances and Body temperature peel performances

The laminate obtained as described above was left for 24 hours at ambient temperature (23°C) and at 50 % relative humidity.

A rectangular strip measuring 2.5 cm by approximately 15 cm was cut out in the coated central area of the laminate. The release film was removed and the sample laminate was folded onto itself over approximately 2.5 cm of the sample, leaving about 10.0 cm of adhesive composition exposed. The fabric was put onto the back-sheet coated with the adhesive composition without any additional force. The laminate was combined with the fabric by two passes of a 2 kg rubber roller at 152.4 cm per minute.

As fabric, cotton fabric used is a standard cotton type 437W whitened - 144g/m². (reference 437-60 by VVC) or a polyester fabric (100 % polyester, microfiber; quality: 229; color: black 6391014; supplier: Bouvelle S.A.S) was used.

Then, the peel performances of the samples (i.e. the laminates combined with the fabric) were determined as follows.

For *"body temperature peel"* : samples of laminates combined with the fabric were prepared as described above. The fabric used in this test was a polyester fabric as disclosed above. After reeling, the samples were left in an oven at 40.6°C under a load of 250g during 4 hours. Samples were then conditioned one hour before testing (after removing the weights and taking out the samples). The samples were then subjected to peel test as described herein.

The two substrates of each sample were separated, starting from one end of the rectangular strip, over approximately 2 cm. The free end of the laminate was fixed to a lower clamping devices connected to a movable part of a tensile testing device and the free end of the fabric was fixed to an upper clamping device connected to a stationary part of the tensile testing device, wherein the stationary and moving parts were located on a vertical axis and spaced by 50 mm.

While a drive mechanism communicated, to the movable part, a uniform speed of 500 mm/minute, resulting in the separation of the two substrates, the separated ends of which were gradually displaced along a vertical axis while forming an angle of 180°, the stationary part, connected to a dynamometer, measured the force withstood by the sample thus held.

The result corresponding to the initial peel after 24 hours at 23°C or to the *"body temperature peel"* is expressed in N/2.5 cm.

### Viscosity

The viscosity of each composition was measured at 163°C according to the standard ASTM D3236, using a Brookfield viscometer (spindle 27).

### Staining

Staining is measured via accelerated aging of the coatings in order to identify a possible migration of the components of the adhesive in the substrate.

Adhesive film is applied on a siliconized release paper and covered by a standard paper (Vellum paper). Sample (6 x 10 cm) was placed under glass plates. Then 45°C heating treatment for 1, 3 and 7 days with visual observations.

### Residue evaluation

Residues left were observed after body temperature peel and assessed by visual inspection: the fabric was observed carefully and the presence of spots on the black fabric lead to a score of "Yes". "No" means that no spot of glue are observed on fabric after peel test.

The results are gathered in the following table:

| **Composition** | **C1 (invention)** | **C2 (comparative)** | **C3 (invention)** | **C4 (comparative)** |
|---|---|---|---|---|
| **Viscosity (mPa.s) at 163°C** | 14 407 | 5 588 | 8920 | 3 975 |
| **Softening point (°C)** | 74.2 | 66.6 | 71.5 | 66.9 |
| **Initial peel on cotton (N 12.5cm)** | 2.1 | 1.5 | 2 | 1.4 |
| **Initial peel on cotton after ageing 4 weeks at 55°C (N/2.5 cm)** | 2 | 1.1 | 2.1 | 1 |
| **Variation initial peel (%)** | -5% | -27% | 5% | -28% |
| **Body temperature peel on polyester (N 12.5cm)** | 5.5 | 2.3 | 5.7 | 1.9 |
| **Body temperature peel on polyester after ageing 4 weeks at 55°C (N/25 cm)** | 4.5 | 1.5 | 4.1 | 1.1 |
| **Variation in body temperature peel (%)** | -18% | -35% | -28% | -42% |
| **Staining** | NO | YES | NO | YES |
| **Residue (*body temperature peel* on polyester)** | NO | NO | NO | YES |

Compositions C2 and C4 are comparative compositions; compositions C1 and C3 are compositions according to the invention.

The compositions C1 and C3 tested for their peel performances on cotton fabric advantageously showed good adhesion properties on this fabric (higher than 1.7 N/2.5 cm for initial adhesion) compared to comparative compositions C2 (1.5 N/2.5cm) and C4 (1.4 N/2.5cm). Besides, the variation on initial peel after ageing is low (-5% for C1, 5% for C3) compared to comparative composition C2 and C4.

The compositions C1 and C3 leads to good use peel on polyester (5.5 N/2.5 cm or 5.7 N/2.5 cm) compared to comparative compositions C2 and C4 (2.3 and 1.9 N / 2.5 cm respectively).

The oil free composition C1 and C3 according to the invention highlight non staining performance in comparison to C2 and C4 which do not comprise PO3.

## Claims

1. Hot melt pressure sensitive adhesive composition comprising:
- a polyolefin PO1 having a melt index greater than 500 g/10 min at 190°C, an enthalpy of crystallization greater than 40 J/g, and a melting point lower than 80°C;
- a polyolefin PO2 having an enthalpy of crystallization lower than or equal to 30 J/g, and a weight average molecular weight (Mw) greater than or equal to 10 000 g/mol;
- a tackifier;
- an amorphous polyolefin PO3 having a weight average molecular weight (Mw) ranging from 500 to 8 000 g/mol.

2. Hot melt pressure sensitive adhesive composition according to claim 1, wherein the PO1 is a homopolymer or copolymer of ethylene, preferably a copolymer of ethylene.

3. Hot melt pressure sensitive adhesive composition according to any one of claim 1 or 2, wherein PO1 is a copolymer of ethylene, and the other monomer(s) constituting said copolymer may be selected from propylene, 1-butene, 2-methyl-1-propene, 1-pentene, 3-methyl-1-butene, 3-methyl-1-pentene, 1-hexene, 1-heptene, 1-octene, and mixtures thereof.

4. Hot melt pressure sensitive adhesive composition according to any one of claim 1 to 3, wherein PO1 has an enthalpy of crystallization greater than or equal to 45 J/g.

5. Hot melt pressure sensitive adhesive composition according to any one of claim 1 to 4, wherein PO1 has a melt index at 190°C and 2.16 kg greater than or equal to 650 g/10 min, preferably greater than or equal to 800 g/10 min.

6. Hot melt pressure sensitive adhesive composition according to any one of claim 1 to 5, wherein the PO1 content said composition ranges from 2 % to 40 % by weight with respect to the total weight of the hot melt pressure sensitive adhesive composition, preferably from 5% to 30 % by weight, more preferably from 5% to 20% by weight.

7. Hot melt pressure sensitive adhesive composition according to any one of claims 1 to 6, wherein PO2 is a homopolymer or copolymer of ethylene, preferably a copolymer of ethylene, the other monomer(s) constituting said copolymer being preferably selected from propylene, 1-butene, 2-methyl-1-propene, 1-pentene, 3-methyl-1-butene, 3-methyl-1-pentene, 1-hexene, 1-heptene, 1-octene, and mixtures thereof.

8. Hot melt pressure sensitive adhesive composition according to anyone of claims 1 to 7, wherein PO2 is a copolymer of ethylene and butene (or octene), comprising more than or equal to 60 % by weight of ethylene units and between 1 % and 40 % by weight of butene (or octene) units with respect to the weight of the PO2.

9. Hot melt pressure sensitive adhesive composition according to anyone of claims 1 to 8, wherein PO2 has a weight average molecular weight ranging from 10 000 g/mol to 75 000 g/mol, preferably from 10 000 g/mol to 50 000 g/mol, and more preferably from 10 000 g/mol to 30 000 g/mol.

10. Hot melt pressure sensitive adhesive composition according to anyone of claims 1 to 9, wherein PO2 has an enthalpy of crystallization ranging from 10 J/ to 30 J/g, preferably from 15 J/g to 30 J/g, more preferably from 20 J/g to 30 J/g.

11. Hot melt pressure sensitive adhesive composition according to anyone of claims 1 to 910, wherein the PO2 content said composition ranges from 2 % to 40 % by weight with respect to the total weight of the hot melt adhesive composition, preferably from 5 % to 30 % by weight, more preferably from 5% to 20 % by weight.

12. Hot melt pressure sensitive adhesive composition according to anyone of claims 1 to 11, wherein PO3 is a homopolymer or copolymer of propylene or butene, preferably a copolymer of propylene.

13. Hot melt pressure sensitive adhesive composition according to anyone of claims 1 to 12, wherein the PO3 content in said composition ranges from 5 % to 40 % by weight with respect to the total weight of the hot melt adhesive composition, preferably from 10 % to 40 % by weight, more preferably from 15% to 35% by weight.

14. Hot melt pressure sensitive adhesive composition according to anyone of claims 1 to 13, wherein at least one tackifying resin is selected from:
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

15. Hot melt pressure sensitive adhesive composition according to anyone of claims 1 to 14, having an enthalpy of crystallization of 15 J/g or lower, preferably from 1 to 12 J/g, even more preferably from 1 to 6 J/g.

16. Hot melt pressure sensitive adhesive composition according to anyone of claims 1 to 15, wherein the total amount of the sum of PO1 and PO2 in said composition is lower than or equal to 50 wt%, preferably lower than or equal to 40 wt% based on the total weight of said hot melt.

17. Hot melt pressure sensitive adhesive composition according to anyone of claims 1 to 16, **characterized in that** it does not comprise mineral oil.

18. Use of the hot melt pressure sensitive adhesive composition according to any one of claims 1 to 17, for adhering a hygiene disposable article on a fabric, the hygiene disposable article being preferably chosen from nonwoven hygiene disposable articles, more preferably from the group consisting of disposable diapers, training pants, adult incontinent products (pads or briefs), periodic care products (napkins or pads), more preferably from the group consisting of adult incontinent products (pads or briefs) and periodic care products (napkins or pads).

19. Disposable absorbent article including a top sheet, a backsheet, optionally an absorbent core disposed between the topsheet and the backsheet, the hot melt adhesive composition according to any one of claims 1 to 17 disposed on the garment-facing surface of the backsheet.
